(19)

Europäisches
Patentamt
European
Patent Office
Office européen
des brevets

(11)     EP 3 608 640 A1

(12)     EUROPEAN PATENT APPLICATION

(43) Date of publication:
**12.02.2020   Bulletin 2020/07**

(51) Int Cl.:
**G01F 25/00** (2006.01)     **G01F 22/02** (2006.01)

(21) Application number: **18188028.7**

(22) Date of filing: **08.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **UniPix Sàrl**
**1028 Préverenges (CH)**

(72) Inventors:
• **Bronzon, David**
  **1070 Puidoux (CH)**
• **Bertrand, Daniel**
  **1247 Anières (CH)**

(74) Representative: **Bovard SA Neuchâtel**
**Rue des Noyers 11**
**2000 Neuchâtel (CH)**

(54)     **METHOD OF CALIBRATING LIQUID HANDLING DEVICES AND ASSOCIATED CALIBRATION APPARATUS**

(57)     The invention is achieved by a volumetric displacement calibration device (1) comprising an aperture (18) configured to adapt an aspiration system, preferably a pipette. The volumetric displacement calibration device (1) comprises at least a first chamber (12) having a volume $V_{00}$ and at least a reference chamber (12), having a volume $V_{ref}$, connected to said first chamber (12) by a first duct (14). A first valve (16) is arranged to said first duct (14) and is switchable from an open position. At least one pressure sensor (20) connected to said first chamber (12).

The invention is also achieved by a calibration method allowing to calibrate the volume of aspired substances such as liquids. The invention relates also to a volumetric displacement calibration system (2) and the use of the device, system and method to the leakage of an aspiration system (100) device.

Fig. 3

**Description**

**Technical Field**

The invention relates to the field of handling liquid and solid substances more particular to a method of calibrating aspired volumes of liquids and/or solid substances. The invention relates also to a volume calibration device and a system configured to calibrate the volume of aspired substances, such as liquids, and a system which is suitable to carry out the method.

**Background of the art**

The precise measurement of the volume of aspired and/or dispensed liquid, solid or gaseous substances is important in several fields, in particular in the field of chemistry and biology in which the aspired volumes are most of the time small, typically less than 1000 µl. Today's standard calibration methods for laboratory suction devices, such as pipettes, is mainly based on a gravimetrical method which comprises the precise weighting of the dispensed liquid by the laboratory precision scale. The majority of pipettes on the market have full range displacement comprised 10 µl and 1000µl. Most common categories are 10µl, 20µl, 100µl, 200µl and 1000µl.

Alternatively, calibration of liquid dispenser can be performed using the principle of dilution of a colored or fluorescent solution into a known volume of water. The dilution methods require the use of well-characterized test solutions and known and precise volume of solvent sample. It also requires a very accurate optical sensing device that needs itself regular calibration.

The specifications of laboratory liquid handling devices, such as pipettes, are guided by the norm ISO 8655. This norm imposes a systematic error typically below 1% of displacement and a random error below 0.4% for maximal range of the pipette. These error values can be higher for small volumes. The required precision for the measurement of volumetric displacement is in the order of 0.1µl. This imposes (density of water) an accuracy of 0.1 mg in weighting the substance, typically a liquid. The calibration process requires: 1) an accurate scale, 2) compensation of errors due to temperature, 3) avoiding evaporation of liquid and 4) a series of very careful manipulations.

The users of laboratory pipettes, depending on their accuracy constraints, must regularly check and calibrate their pipettes. As the calibrations need specific skills, the users often subcontract this task to external service providers. The cost of calibration is therefore a non-negligible part of the cost of ownership of laboratory pipettes.

There are no simple, low cost pipette calibrators on the market and none have been disclosed in prior art documents. The majority of existing or disclosed products are based on laboratory scales and require very careful handling and weighting of liquids. There exist at least two products called "pipette testers" that are based on the measurement of the leak rate when the pipette is pressurized and which are described in the following internet references 1-2:

    1) https://www.brandtech.com/product/plt-pipette-leak-testing-unit/
    2) https://www.aandd.jp/products/test_measuring/pipette/ad1690.html

The leak checking allows the rejection of leaky pipettes, but is not a measurement of the volumetric precision, as it is required by the ISO 8655. Therefore, the gravimetric calibration method is still needed to qualify the pipettes.

The document US2012/0240663 describes a method for leak-testing hand-held piston strike pipettes and an associated leak-testing apparatus. The system and method described in US2012/0240663 allows to detect leakage in single-channel and multichannel piston stroke pipettes by using a pressure sensor and a vacuum pump and consist in measuring pressure raise after stopping or disconnecting the vacuum pump, the system and method does not provide a solution for measuring accurately the aspired volumes by the pipettes.

The document US3962916 describes a complicated system comprising a plurality of electronic controlled fluidic gates for the measurement of a closed air space but would be unsuitable to calibrate precisely a small volume of an aspired liquid. It is based on the use of a regulated gas supply that is needed to generate a reference pressure.

Document US8561459 describes a volume gauge comprising a chamber comprising a pressure changing device coupled to said chamber. The pressure changing device is configured to change a pressure and to measure a gas pressure of air located in the chamber. A processor having a memory stored with the total volume of the chamber and a reference pressure corresponding to an empty chamber is provided. Based on received pressure measurement data, the processor may determine the percentage volume occupied by a solid or liquid substance. Although the system disclosed in US2012/0240663 allows determining approximately the volume of a solid or liquid substance, the system is not very fast and is not accurate and may achieve at best a precision of about 1%. Also, the system is complex as requiring a pressure control system. Furthermore, in order to achieve higher accuracies the system of US2012/0240663 would need a compensation correction for temperature variations. Also, evaporation of the liquid may be an additional source of inaccuracy.

Therefore, a better system than the ones available from prior art is required. The system should be simpler, cheaper and faster and be more reliable than existing devices. Furthermore, the precision should be at least as good or better than the precision of known liquid weighting method, which is the reference method used in the ISO standard. Additionally there is a need for a new system so that the user can easily perform calibration as often as desired without the need of a precise scale and possibly without liquid or sample solution. A new method and system should reduce the cost of ownership of laboratory pipettes and increase quality control because of its ease of use. None of the cited requirements can be achieved by existing or disclosed precise volume measurement systems.

**Summary of the invention**

The invention proposes a new liquid handler calibration method and a system, configured to calibrate the volume of aspired and/or dispensed substances, such as liquids, which solve the limitations of devices and calibration methods of prior art. The calibration method and device does not require liquid sample handling and is based on the measurement of gas displacement volume through the pressure change inside a closed volume. Available barometric pressure sensors have an absolute accuracy below 0.1mbar and a short-term repeatability below 0.02mbar. As the relative change of pressure is equal to the relative change volume, typical 0.1% absolute accuracy can be reached in displacement measurements.

The gas volume calibration method is at least as accurate as existing liquid weighting methods but it is much simpler and much faster and cheaper. Moreover, there is no need to compensate for temperature variation effects and the system does not need to avoid evaporation. Contrary to known weighting calibration techniques the user can easily perform calibration as often as desired without the need of a precise scale. In addition, as the system uses no liquid, the user can verify the functionality of the pipette and tip prior to a given measurement. The new method of the invention reduces the cost of ownership of for example laboratory pipettes and increases the quality control because of its ease of use. In addition, the method allows e.g. the detection and characterization of pipetting failure and the need of seal replacement in liquid handler devices such as pipetting devices.

More precisely the invention is achieved by method for calibrating volumetric fluidic handling system comprising the steps (a-i) of:

a) providing a system configured to aspire and/or dispense liquid or solid substances, such as a pipette;

b) providing a volumetric displacement calibration device comprising a first chamber having a volume $V_{00}$ and a reference chamber, having a reference volume $V_{ref}$, connected to said first chamber by a first duct to which a first valve is arranged, said valve being configured to be switched from an open position, allowing said first and said reference chamber to be in fluidic connection, to a closed position so that said first and reference chamber have no fluidic connection, said first chamber comprising at least one pressure sensor;

c) connecting said aspiration/dispensing system to said first chamber while said first valve is in said open position;

d) measuring an initial pressure $P_0$ in said first chamber by said pressure sensor;

e) activating the aspiration/dispensing system from a first volume reference position R1 to a predetermined positive or negative second volume reference position R2, said first and second reference positions R1, R2 defining a displaced volume $\Delta V$;

f) measuring an intermediate pressure $P_1$ in said first chamber by said pressure sensor while the pipette remains in said second predetermined volume reference position R2;

g) switching said first valve from said closed position to said open position so that said first chamber and said reference chamber achieve both a final pressure $P_2$;

h) measuring said final pressure $P_2$ by said pressure sensor;

i) determining the value of said displaced volume $\Delta V$ by using the values of said initial, intermediate and final pressures $P_1$, $P_2$, by applying the following relation:

$$\Delta V = V_{ref}/(P_1/(P_1-P_0)-P_2/(P_2-P_0))$$

In an embodiment the method comprises a step of connecting the first chamber to at least a predetermined second chamber by a second duct comprising a second valve, by positioning said second valve is in its open position.

In an embodiment the method comprises a step of connecting the first chamber to at least a predetermined second chamber by a second duct comprising a second valve, by positioning said second valve is in its open position.

In an embodiment said aspiration/dispensing system is a pipette, preferably comprising a pipette tip, and the method comprises, before the volume measurement steps a-j a further step of selecting the size of the pipette tip.

In an embodiment said volumetric displacement calibration device comprises a step to adapt the size and/or shape of the fluidic connection of said aspiration system to said device in function of a predetermined size of the aspiration aperture (O) of said aspiration system.

In an embodiment the volumetric displacement calibration device comprising the fluidic connection of a predetermined selection of chambers to form a first chamber rand/or the fluidic connection of another predetermined selection of chambers to form a reference chamber.

The invention is also achieved by a volumetric displacement calibration device comprising at least one an aperture configured to adapt an aspiration system, preferably a pipette, and wherein

- said volumetric displacement calibration device comprises at least a first chamber having a volume $V_{00}$ and at least a reference chamber, having a volume $V_{ref}$, connected to said first chamber by a first duct;

- a first valve arranged to said first duct, and configured to be switchable from an open position, allowing said first chamber and said reference chamber to be in fluidic connection, to a closed position in which said first and second chamber have no fluidic connection,

- At least one pressure sensor connected to said first chamber.

In an embodiment said first chamber comprises at least two chambers in fluidic connection by a duct comprising a valve. In a variant said first chamber has a continuously variable volume

In an embodiment said reference chamber comprises at least two chambers in fluidic connection by a duct comprising a valve. In a variant , or wherein said reference chamber has a variable volume

In an embodiment said aperture is a configurable aperture which size and/or shape may be adapted according to a predetermined size and/or shape.

In an embodiment at least a portion of said chamber is realized at least partially with a MEMS technology.

In an embodiment said device is a realized at least partially in glass. In an advantageous embodiment said device is a monolithic device.

In an embodiment the volume defined by chamber of an aspiration system and said first chamber is smaller than 6 times the displaced volume of the volumetric displacement calibration device in operation.

The invention relates also to a volumetric displacement calibration system comprising the volumetric displacement calibration device and comprising a computer performing the calculation of a displaced volume according to the described method. The invention relates also to the use of the volumetric displacement calibration device, configured to measure the leakage of an aspiration device such as a pipetting device.

**Brief description of the drawings**

Further details of the invention will appear more clearly upon reading the following description in reference to the appended figures:

- Figure 1a, 1b show schematically a cross section of a liquid handler calibration device;

- Figure 2 illustrates a liquid handler calibration system;

- Figure 3 illustrates the use of a pipette calibration system;

- Figures 4a-4f shows different steps during a calibration sequence of a pipette by a volumetric displacement calibration device of the invention;

- Figure 5a-c illustrate embodiments of volumetric displacement calibration devices comprising a plurality of chambers that can be implemented either in parallel or in series as illustrated in this figure;

- Figure 6a and 6b illustrate respectively the use of a volumetric displacement calibration device for detecting leaks in a pipette and leaks at a pipette tip;

- Figure 7a shows a 3D view of a monolithic liquid handler calibration device and system comprising a movable plate having a plurality of apertures;

- Figure 7b shows a cross section of two joined parts of a monolithic liquid handler device.

- Figures 8-11 show experimental results obtained with a calibration device of the invention;

- Figure 12 shows experimental results allowing determining measurement accuracies in function of the involved volume of a liquid handler device.

- Figure 13 shows comparison measurements between a gravimetric method and the method and device of the invention.

## Detailed description and embodiments of the invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not correspond to actual reductions to the practice of the invention.

It is to be noticed that the term "comprising" in the description and the claims should not be interpreted as being restricted to the means listed thereafter, i.e. it does not exclude other elements.

Reference throughout the specification to "an embodiment" means that a particular feature, structure or characteristic described in relation with the embodiment is included in at least one embodiment of the invention. Thus appearances of the wording "in an embodiment" or, "in a variant", in various places throughout the description, are not necessarily all referring to the same embodiment, but several. Furthermore, the particular features, structures or characteristics may be combined in any suitable manner, as would be apparent to a skilled person from this disclosure, in one or more embodiments. Similarly, various features of the invention are sometimes grouped together in a single embodiment, figure or description, for the purpose of making the disclosure easier to read and improving the understanding of one or more of the various inventive aspects. Furthermore, while some embodiments described hereafter include some but not other features included in other embodiments, combinations of features if different embodiments are meant to be within the scope of the invention, and from different embodiments. For example, any of the claimed embodiments can be used in any combination. It is also understood that the invention may be practiced without some of the numerous specific details set forth. In other instances, not all structures are shown in detail in order not to obscure an understanding of the description and/or the figures.

The invention is achieved by a liquid handler calibration device 1, also defined as liquid handling calibration device or volumetric displacement calibration device. The invention is achieved by a liquid handler calibration system 1 and a method to calibrate a liquid handler 100 which may be an aspiration system and/or a dispensing system. In the present document the term aspiration system or device means that the system may be also a dispensing system and may be a system that is configured to aspire and dispense substances such as liquids. It is understood that the device 1 of the invention may be configured to handle liquids or solids or liquids comprising solid substances. In preferred embodiments, the liquid handler calibration device 1 is a pipette calibration device 1 for pipettes 100 that may or may not comprise a piston. The liquid handling calibration device 1 of the invention relates to the handling, such as suction and transfer, of substances having preferably small volumes of less than 10ml. Larger volumes such as 100ml may be used in function of the volumes of the chambers 10, 12 of the device 1 as described further. Liquid handling is defined broadly here and is not necessarily limited to liquids but may also be the handling of gels, powders and mixtures of liquids and solid substances.

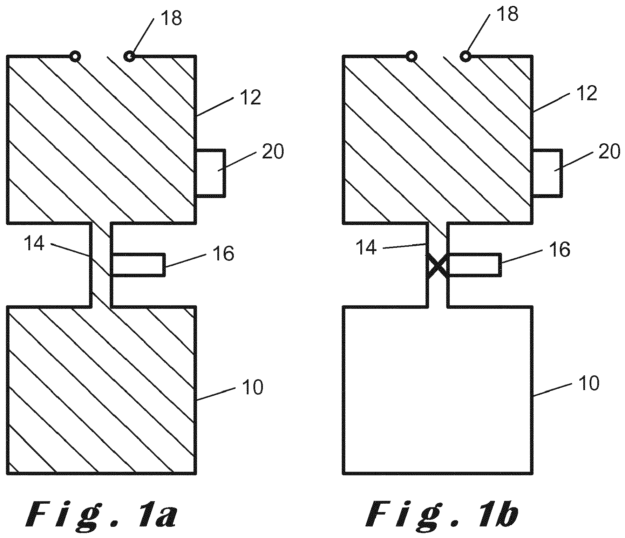

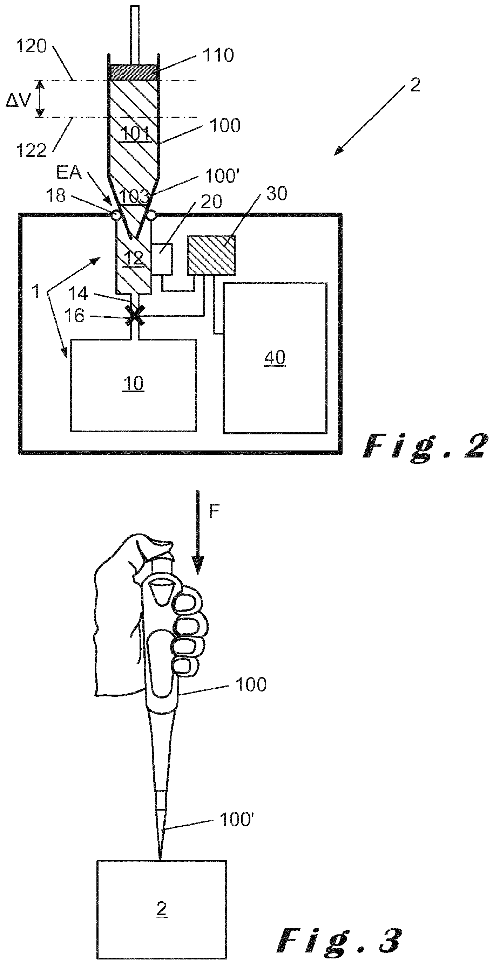

Fig. 1a, 1b and Figs. 3a-3f illustrate an embodiment of a volumetric displacement calibration device 1 comprising at least one aperture 18 configured to adapt the entry aperture EA of an aspiration system 100, preferably the tip 100' of a pipette 100, and wherein:

- said liquid handling calibration device 1 comprises at least a first chamber 12 having a volume Voo and a reference chamber 10, having a volume Vref, connected to said first chamber 12 by a first duct 14;

- a first valve 16 is arranged to said first duct 14, and configured to be switchable from an open position, allowing said first chamber 12 and said reference chamber 10 to be in fluidic connection, to a closed position in which said first 12 and second 10 chamber have no fluidic connection;

- at least one pressure sensor 20 connected to said first chamber 12;

Said first duct 14 and said chambers 10, 12 may be made of the same material or different materials. Preferable materials used for the liquid handling calibration device 1 are metals, ceramics, semi-conductors or plastics or a combination of them. Said valve 16 may be different types of valves such as manual mechanical valves or electromagnetic valves or micro-valves integrated in the liquid handling calibration device 1 by using micro-technologies. It is also understood that a valve may comprise a plurality of identical or different valves arranged on the same duct or at the entry and/or outlet apertures of the related chambers 10, 12.

The aspiration system 100 comprises an aspiration element 110 and at least one aspiration chamber 101 having an aspiration or dispensing volume Vp when the aspiration system 100 is positioned in an initial position, defined as a first reference position R1 as illustrated in the embodiment related to the use of a pipette 100 of Figs 3d-3e. It is understood that said aspiration element 110 may be any element or portion of an element that undergoes a displacement or a deformation. For example, the displacement element may be the piston of a pipette, but may also be the deformation of a surface of a part of an aspiration system, such as the change of the curvature of a flexible wall of a liquid container.

An initial volume $V_0$ is defined as the sum of said aspiration or dispensing volume Vp and the volume $V_{00}$, i.e. $V_0 = Vp + V_{00}$. In the case of an aspiration system 100 such as a pipette 100 said initial volume $V_0$ comprises the volume of the reservoir 101 of the pipette 100 and the volume 103 of the tip 100' of the pipette. It is also understood that an aspiration system may comprise more than one aspiration/dispensing reservoir 101. In embodiments more than one opening may be arranged in the device 1 so that more than one tip may be arranged to a single device 1..

As explained further in the experimental section, said aspiration volume Vp should not be too large compared to the volume $\Delta V$ of the aspiration element 110 displacement d during the calibration. Typically Vp should be less than $15 \times \Delta v$, preferably less than $10 \times \Delta V$, more preferably less than $6 \times \Delta V$.

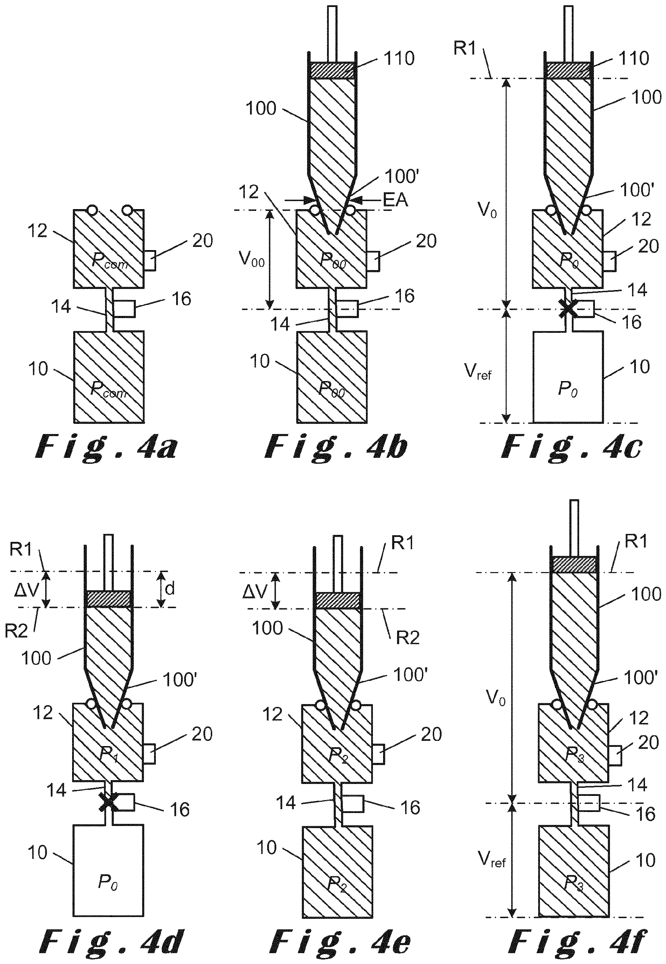

The liquid handling calibration device 1 comprises means to fix the aspiration extremity of an aspiration/dispensing device, such as the tip 100' of a pipette 100. As explained further in the method section and illustrated in Figs 3a-3f, for the calibration, the aspiration device, preferably a pipette, is configured so that a user activates the aspiration device 100 for a set volume displacement $\Delta V$ to be measured. As illustrated in Figs. 4b-c, the device provides a pressure $P_0$ (Fig. 4c) before the displacement and $P_1$ after the air compression due to displacement (Fig. 4d). As the initial volume of test is not known, the device encloses a second cavity having a defined volume $V_{ref}$ that is used as reference. The second cavity is defined as reference chamber 10. As explained further in the method section, the displacement volume $\Delta V$ can be computed form the measurements of the pressure $P_0$ before applying the displacement, the pressure $P_1$ after applying the displacement of $\Delta V$ and the pressure $P_2$ after opening the valve 16 to the reference cavity 10.

The air calibration method is as accurate as the liquid weighting method but it is much simpler, requiring no liquid, and much faster. Moreover, there is no need to compensate for temperature or avoiding evaporation. Contrary to weighting calibration, the user can easily perform calibration as often as desired without the need of a precise scale. This new method, the device 1 and system 2 reduces the cost of ownership of laboratory liquid handlers such as pipettes and increases the quality control because of its ease of use. In addition, this method allows the detection and characterization of, for example, pipetting failure and need of seal replacement in aspiration devices such as a pipetting device.

In an embodiment, at least one additional chamber is arranged to said first chamber 12 by a second duct comprising a second valve.

In a variant at least one further chamber is arranged to said first chamber by a third duct comprising a third valve.

In advantageous embodiments illustrated in Figs 4a-4c, a plurality of chambers may be arranged in fluidic connection to said first chamber 12 and/or a plurality of chambers may be arranged in fluidic connection to said reference chamber 10. In embodiments said chambers may be connected in series (Figs. 4a.4c) and/or in parallel (not shown in figures). As described further, the chambers may be arranged in different parallel planes.

The advantages of using a plurality of connectable chambers in fluidic connection with a first chamber and/or a reference chamber is to be able to provide a reconfigured first chamber 12 and/or a reconfigured reference chamber 10 having different predetermined volumes in function of the selection of some of said connectable chambers in function of, for example, the use of a particular liquid handling device.

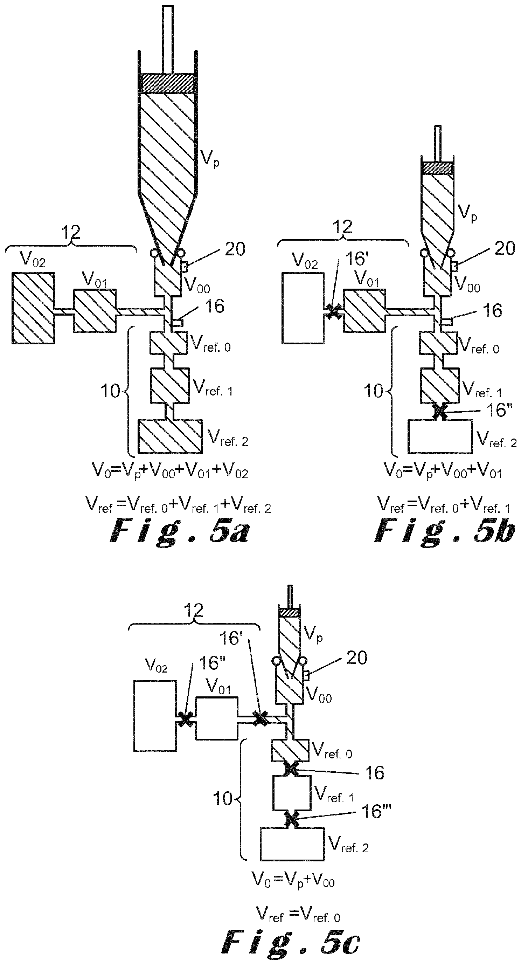

For example, Fig.5a illustrates this in an exemplary configuration wherein three chambers having volumes of $V_{00}$, $V_{01}$ and $V_{02}$ are in fluidic connection and forming a first chamber 12. A valve separates this first chamber 12 to a reference chamber 10 comprising three chambers in fluidic connection and having volumes of $V_{ref,0}$, $V_{ref,1}$ and $V_{ref,2}$.

Fig. 5b illustrates another embodiment wherein the formed first chamber 12 has a volume $V_0 = V_p + V_{00} + V_{01}$ and wherein a reference chamber 10 is formed having a volume $V_{ref} = V_{ref,0} + V_{ref,1}$.

Fig. 5b illustrates another advantageous embodiment wherein the formed first chamber 12 has a volume $V_0 = V_p + V_{00}$ and wherein a reference chamber 10 is formed having a volume $V_{ref} = V_{ref,0}$.

By closing or opening the valves 16,16',16",16'" a wide variety of first chambers 12 and reference chambers 10 may be provided.

It is understood that in embodiments said chambers may be a plurality of micro-chambers such that said first chamber 12 and /or said reference chamber 10 may comprise a great number of micro-chambers, for example more than 10, preferably more than 100 micro-chambers that are connected by microfluidic channels of which some comprise micro-valves or even nanovalves. In variants, said micro-chambers may have dimensions of less than $20\mu mx20\mu mx10\mu m$.

In an advantageous embodiment of the invention, instead of using multiple fluidically connected chambers, the device 1 may comprise at least one chamber 10, 12 that has a variable volume, such as a chamber which volume may be changed by deformation or by using a piston or by any other means. The use of such a chamber is described in detail in an embodiment of the method. Such a variant requires the use of a precise and calibrated piston or deformation system.

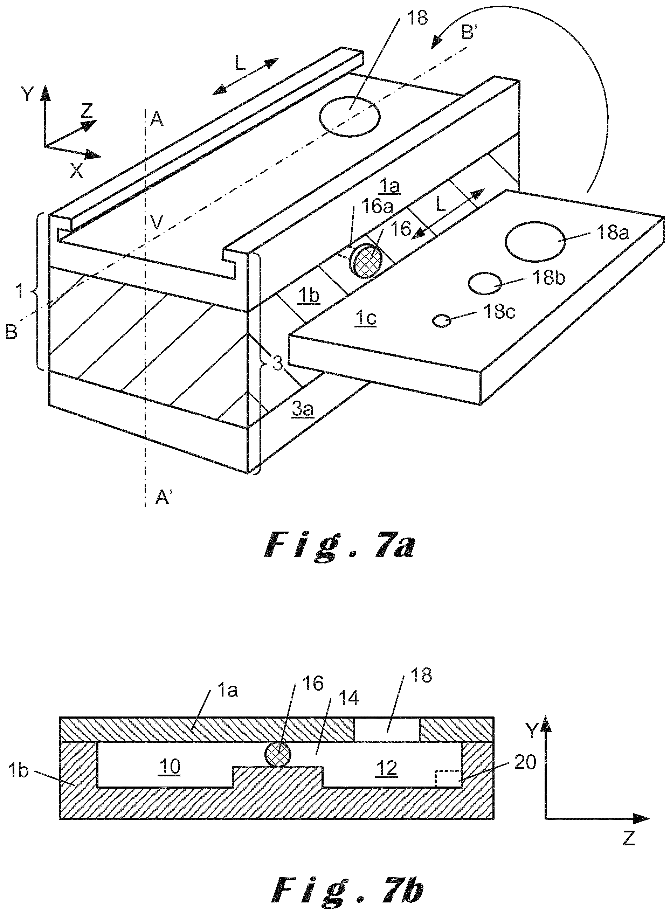

In an embodiment the volumetric displacement calibration device 1 comprises means to fix said pipette tip 101' to said aperture 18 to avoid leakage between the steps of the volume measurement. For example, as illustrated in Fig. 7a and described further, a plate 1c comprising different sized holes may be adapted to the device 1.

In variants, said means comprise a recognition system that may identify the shape and dimension of an approaching liquid handling tip and comprise adaptation means that modify the shape of said aperture 18. Said adaption means may comprise for example a spring, a memory shape alloy element or any system that may change its shape and/or size so that a liquid handling tip may be connected and maintained to the device 1 without leakage.

In an embodiment at least a portion of said chamber is realized at least partially with a MEMS technology.

In variants at least a portion of the device is realized at least partially in glass, preferably by using micro-structuring techniques of glass.

In an advantageous embodiment, illustrated in Fig. 7a, 7b said device 1 is a monolithic device. A monolithic device may comprise a first part 1a having a through-hole 18 and a second part 1b comprising said chambers 10, 12. Fig.7b shows an exemplary cross-section, in a Y-Z plane AA'-BB' of said first 1a and second part 2b that form a single solid device. 1 Said first part 1a and second part 1b may be made with different materials. For example, the first part 1a may be made at least partially in glass while said second part is made at least partially in a slab of silicon (Si), the chambers 10, 12 being made, at least partially, by micro-structuring technologies.

In an embodiment said device 1 comprises a solid plate 1c comprising different apertures 18a,b,c The solid plate 1c may be adapted on said device that comprises means to slide the plate 1 along a direction L so that in different positions of said plate 1 relative to said device 1 different apertures 18a,b,c may be aligned facing said aperture 18 of the device 1. Said apertures may have any shape such as a conical shape.

In the embodiment of Figs 7a, b a valve 16 is illustrated schematically and may be any valve, such a manual valve, or a valve integrated in said chambers 10, 12 or duct 14.

It is also understood that in variants several chambers being located in different horizontal planes X-Z may be arranged in fluidic connection as described before. The chambers of the device 1 may have any shape and dimension and may be delimited by at least one curved surface, such as a cylindrical wall.

The invention relates also to a volumetric displacement calibration system 2 comprising the volumetric displacement calibration device as described and comprises a computer performing the calculation of a displaced volume according to the method of the invention. Fig. 7a illustrates an embodiment of a monolithic volumetric displacement calibration system 2 comprising the described monolithic device 1b and an additional part 1c comprising electronic circuits, possibly also a microcomputer and/or a microcontroller and electrical connectors to connect said system 2 to other external electronic systems and/or a computer.

In an advantageous embodiment, the device 1 and /or system 2 comprises a computer or/a printer configured to:

- print an ISO calibration report on printer. The print is on a label sticker that can be directly placed to the pipette in order to track the ISO calibration in a lab;
- connect to computer or tablet in order to link to quality system of the laboratory;
- connect to Laboratory Information Management System (LIMS), an Electronic Laboratory Notebook (ELN).

It is also understood that in advantageous variants of the volumetric displacement calibration system 2 several devices 1 may be arranged so that a single system 2 may be used to calibrate, in series or in parallel, a plurality of liquid handling devices, such as pipettes . The system 2 may be adapted so that several types of liquid handling devices may be calibrated at the same time.

## Method for calibrating liquid handling devices

The invention is also achieved by a method for calibrating liquid handling devices 100, such as liquid aspiration devices, preferably, but not exclusively, pipettes.

The principle of the method is illustrated in the steps of Figs. 4a-4f. Details of the method are now described for the preferred case of the use of a pipette 100. It is understood that the method of the invention may be applied also to other aspiration devices, such as the ones used in automated aspiration devices. The aspiration device 100 is preferably a pipette that may be a pipette comprising a piston but not necessarily so.

In an embodiment, the method consists in measuring the pressure change p1-p0 caused by the piston displacement $\Delta V$ in the pipette. Adequate opening of an additional reference volume $V_{ref}$, allows the computation of input volume Vo and $\Delta V$ (Equations 1 and 2). A valve 16 is opening the reference cavity 10 (volume $V_{ref}$), after the displacement $\Delta V$ and the pressure $P_2$ is recorded (figure 4e).

The pressures $P_0$, $P_1$ and $P_2$ allow, by for example said system 2, to compute the effective displacement $\Delta V$.

The different involved volumes and pressures are detailed now:

A) displacement $\Delta V$ in the volume V0 (equation 1):

$$\Delta V = V_0 \frac{\left(P_1 - P_0\right)}{P_1} \qquad \text{equation 1}$$

B) opening of the valve for reference volume $V_{ref}$ (equation 2) :

$$V_0 = -\Delta V \frac{P_2}{\left(P_2 - P_0\right)} - V_{ref} \qquad \text{equation 2}$$

C) combination of equations 1 and 2:

$$\Delta V = V_{ref} / \left( \frac{P_1}{\left(P_1 - P_0\right)} - \frac{P_2}{\left(P_2 - P_0\right)} \right) \qquad \text{equation 3}$$

More precisely, the method of the invention comprises the steps (a-i) of:

a) providing a liquid handling system (100), preferably a pipette, configured to aspire/dispense substances such as liquids;

b) providing a liquid handling displacement calibration device 1 comprising a first chamber 12 having a volume $V_{00}$ and a reference chamber 10, having a reference volume $V_{ref}$, connected to said first chamber 12 by a first duct 14 to which a first valve 16 is arranged, said first valve 16 being configured to be switched from an open position, allowing said first 12 and said reference 10 chamber to be in fluidic connection, to a closed position so that said first 12 and second 10 chamber have no fluidic connection, said first chamber 12 comprising a pressure sensor;

c) connecting said pipette 100 to said first chamber 12 while said first valve 16 is in said open position;

d) measuring an initial pressure $P_0$ in said first chamber by said pressure sensor;

e) activating the pipette 100 from a first volume reference position R1 to a predetermined positive or negative second volume reference position R2, said first and second reference positions R1, R2 defining a displaced volume $\Delta V$;

f) measuring an intermediate pressure $P_1$ in said first chamber 12 by said pressure sensor while the pipette 100 remains in said second predetermined volume reference position R2;

g) switching said first valve 16 from said closed position to said open position so that said first chamber 12 and said reference chamber 10 achieve both a final pressure $P_2$;

h) measuring said final pressure $P_2$ by said pressure sensor 20;

i) determining the value of said displaced volume $\Delta V$ by using the values of said initial, intermediate and final pressures $P_1$, $P_2$ by applying the relation of said equation 3:

$$\Delta V = V_{ref}/(P_1/(P_1-P_0)-P_2/(P_2-P_0))$$

The typical timing of the procedure is a few seconds for each step a-i. The time for displacement should be the same that what is routinely recommended for using the pipette with liquids, typically between 1 and 3 seconds. The pressure $P_1$ is recorded about 1 second after the displacement $\Delta V$ in order to leave time for air pressure equilibration. Just after the reading of $P_1$, the valve 16 connecting to the reference cavity $V_{ref}$ is open and the pressure $P_2$ is measured after typically 1 second.

A pressure $P_3$ (Fig.4f) can be recorded after moving back the piston to its initial position. This does not add new information of displacement volume but can be used to access that no leaks or other malfunctions occurred during the measurement.

The method of the invention is not restricted to positive displacements but can be applied for negative displacements.

The displaced volume $V_x$ provoked by the opening of the valve to the reference volume ($V_{ref}$) can be taken in account and compensated. In this case, the formula 3 is modified and the displacement volume $\Delta V$ is computed by the following formula:

$$\Delta V = -\frac{V_{ref}\left(P_1-P_0\right)\left(P_2-P_0\right)+V_x P_2\left(P_1-P_0\right)}{P_1\left(P_2-P_0\right)-P_2\left(P_1-P_0\right)}$$

In embodiments illustrated in Figs. 5a-5c, the device 1 and system 2 can be build, as described before, with several reference volumes that are individually addressable for each case. Once a specific combination of fluidic connected chambers is selected, the measurement method remains similar as described before.

In an embodiment rather than using multiples chambers a single chamber may be used of which the volume may be adapted. In such an embodiment the method of the invention comprises the following steps:-

a') providing an liquid handling system 100, preferably a pipette comprising a piston 101', configured to aspire/dispense substances such as liquids;
b') providing a volumetric displacement calibration device 1 comprising at least a deformable chamber;
c') adapt said liquid handler system 100 to said calibration device 1;
d') modify the volume of said deformable chamber by a known volume change dV;
e') measure the pressure and deduce said volume $V_{00}$;
f') displace the piston 101' so that a volume change of $\Delta V$ is determined ;
g') compare the volume change $\Delta V$ with the predetermined volume change.

In the embodiment of the invention wherein the volumetric displacement calibration device 1 comprises at least a deformable chamber, the volume change dV of the deformable chamber may be chosen to optimize the pressure changes. On the other hand such a system requires a precise volume change dV and the system needs an internal actuator in order to determine $V_{00}$. The advantage is that only one chamber may be necessary, so there is no need for a system comprising valves. In an embodiment, the method comprises before the volume measurement steps a-j, a further step of selecting the size of the pipette tip.

In an embodiment the method comprises the selection of a combination of chambers, in fluidic connection, to form a first 12 and/or a reference 10 chamber.

## Leak testing

The invention relates also to the use of the volumetric displacement calibration device as described, and specifically, configured to measure the leakage of a pipetting device.

The invention relates also to the use of the volumetric displacement calibration device as described and configured to measure the leakage of a pipette tip. It is understood that measurements with the device and method of the invention may be carried out with pipettes or other aspiration devices that have no tip.

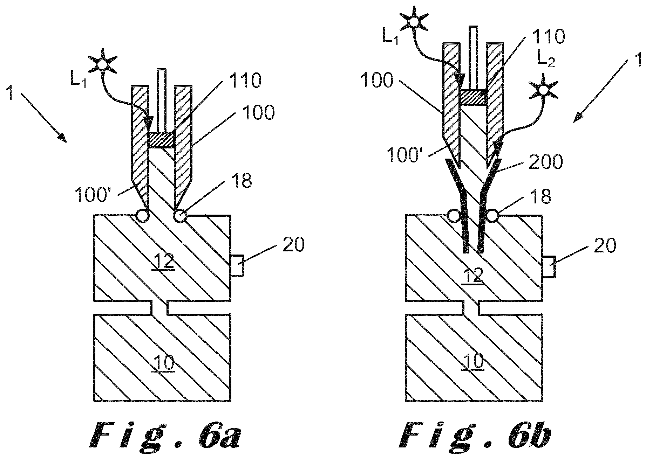

Leakage can be characterized by measuring the pressure in a closed chamber as a function of time. Both leakage of the pipetting device and/or tip connection can be characterized as illustrated in the Figure 6a, 6b.

The leakage is measured after the piston displacement $\Delta V$, by measuring the pressure $P_1$ after two consecutive times separated by typically 1 or few seconds. The leak rate can be precisely computed in terms of $\mu l/sec/mbar$ by using the drift of p1 and the computed value of the input volume.

Some products on the market comprise a leak tester on the market which measures the leak rate of pipettes. But, as in these known devices the exact input volume is not known, the value of the leak rate cannot be precisely calculated in absolute values.

## Exemplary realization of the invention and experimental results

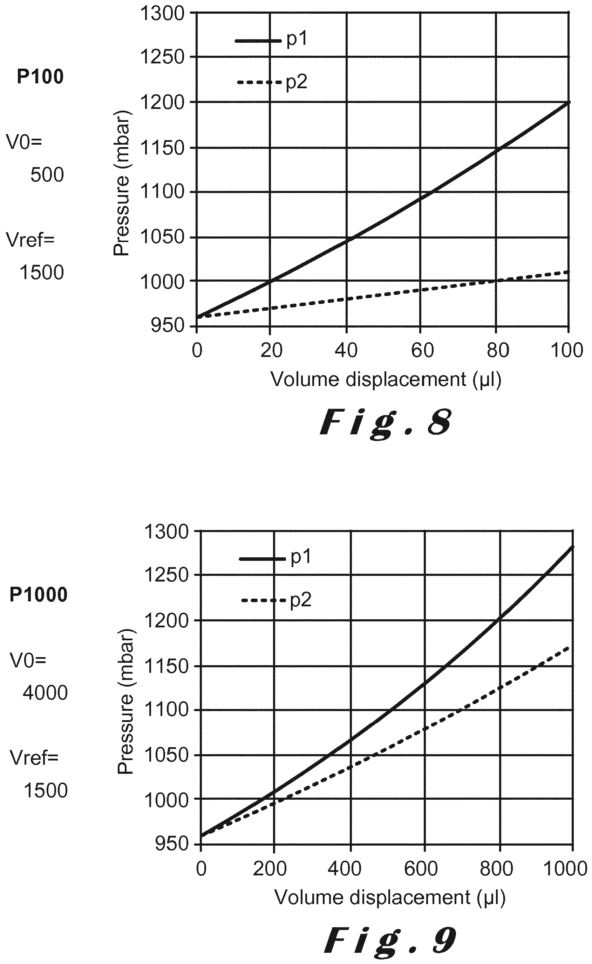

Figures 8-11 show typical measurement results (volumes are expressed in $\mu l$).

Figures 8 and 9 show the evolution of pressure P1 and P2 for a pipette volume displacement in the 100 $\mu l$ (pipette P100) and 1000 $\mu l$ (pipette P1000) ranges. It shows that the input volume of P100 must be smaller in order to reach a pressure P1 and pressure difference P1-P2 that are high enough compared to the resolution of the pressure sensor.

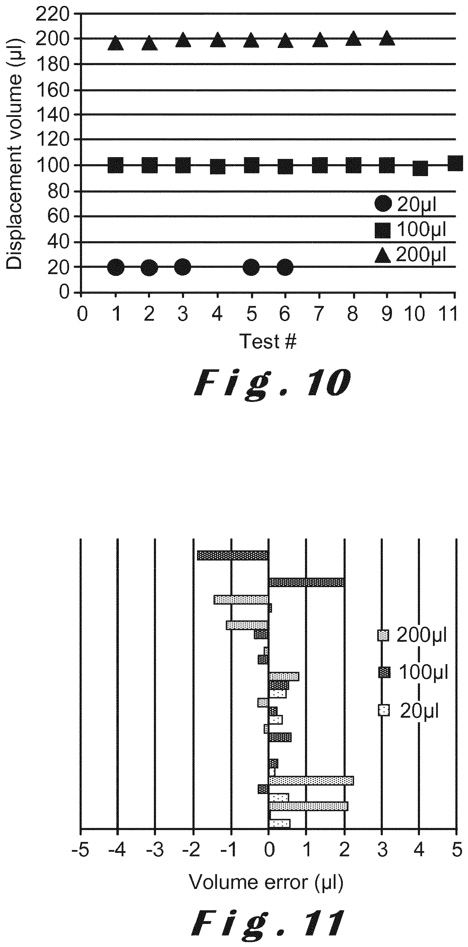

Figure 10 for example illustrates repeated measurements of a 200$\mu l$ pipette, for 200, 100 and 20 $\mu l$ displacements. The volume calibration error is as good as ISO calibration method by gravimetry.

An important design parameter of the system is the value of the initial volume V0. Measurements with a pipette calibration system of the invention allows to calculate ideal and preferred values of the volume $V_0$.

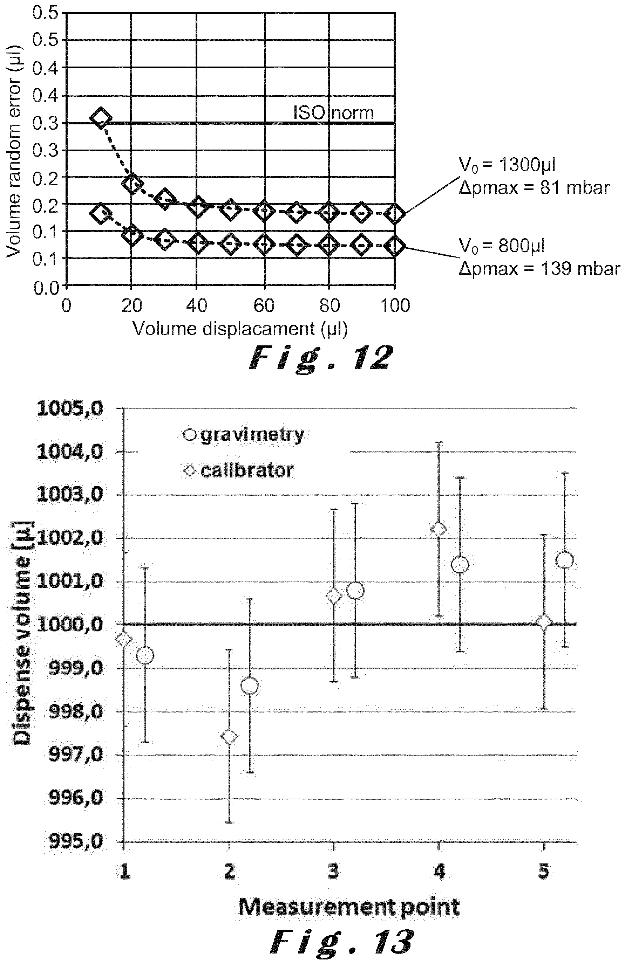

In an experimental setup (Fig.12) using a pipette calibration system of the invention the initial volume $V_0$ was determined to be 1300$\mu l$. Figs. 12-14 show how one can deduce the error of the deduction of the value of V0. More precisely Figs. 12-14 show volume errors determined in function of volume displacements for different values of V0, i.e. 1300$\mu l$, and 800 $\mu l$. Fig.12 shows that an initial volume $V_0$ of 1300 $\mu l$ leads to an error of about 0.2 $\mu l$ but raises to a value of 0.3$\mu l$ for a displacement of 10$\mu l$ . The maximal pressure difference $P_1$-$P_0$, deduced from the curve of Fig.12, is 81mbar. Fig.12 shows the effect of input volume Vo on the random error measurement. The horizontal line at 0.3 $\mu l$ is the requirement of ISO norm. With $V_0$ = 1300, the small displacement calibration is at the limit of the norm. With 800$\mu l$, the random error (calculated) is much lower, and remains below the ISO limit, even for small displacements.

The measurements performed with a device 1 of the invention show that a smaller value of $V_0$ gives a higher accuracy. An initial volume $V_0$ of 800$\mu l$ reduces the error of displacement measurement of 10$\mu l$ to less than 0.2$\mu l$, keeping an acceptable pressure of about 139mbar.

In conclusion, one can deduce that an initial volume $V_0$ should be preferably lower than 5 times the volume that is displaced in order to keep an acceptable pressure difference $\Delta p$ of less than 200mbar.

No simple and cheap system of prior art can achieve the precision obtained with the device 1, system 2 and method of the invention.

## Applications

Various applications of the volume calibration method and system are identified such as and among others:

1. a device for calibrating small volume fluidic displacements based on precise pressure measurements.
2. a device for the characterization of leakage in fluidic displacement instruments t based on measurement of the pressure changes as function of time $p_1(t)$.
3. calibration of volume dispense and leakage rate of laboratory pipettes.
4. in specific applications of laboratory pipettes, the device can be used for calibrating the pipette and measuring leakage with or without a disposable tip mounted on the pipette.
5. the same device can be used for several pipette volume ranges, such as, for example, 10, 20$\mu l$, 100$\mu l$, 1000$\mu l$.
6. providing adequate design, the device range can be extended to lower or higher volume. Multiple ranges can be covered by adapting the input volume
7. applications wherein the input volume $V_0$ of the closed cavity comprising the volume in the pipette, the volume of the tip and the apparatus dead space is not a priori determined.
8. Applications in which the effect of the dead volume of the fluidic switch $V_x$ must be determined and compensated.

It is also understood that the volumetric displacement calibration device of the invention may be adapted to measure the volumes of other substances such as powders, gels or gases.

**Claims**

1. A method for calibrating a volumetric fluidic handling system comprising the steps (a-i) of:

   a) providing a aspiration system (100), preferably a pipette, configured to aspire liquid or solid substances;
   b) providing a volumetric displacement calibration device (1) comprising a first chamber (12) having a volume V00 and a reference chamber (10) having a reference volume $V_{ref}$, connected to said first chamber (12) by a first duct t(14) o which a first valve (16) is arranged, said first valve (16) being configured to be switched from an open position, allowing said first (12) and said reference chamber (12) to be in fluidic connection, to a closed position so that said first (12) and second chamber (10) have no fluidic connection, said first chamber (12) comprising at least one pressure sensor (20) ;
   c) connecting said aspiration system (100) to said first chamber (12) while said first valve (14) is in said open position;
   d) measuring an initial pressure $P_0$ in said first chamber (12) by said at least one pressure sensor (20) ;
   e) activating the aspiration system (100) from a first volume reference position R1 to a predetermined positive or negative second volume reference position R2, said first and second reference positions R1, R2 defining a displaced volume $\Delta V$;
   f) measuring an intermediate pressure $P_1$ in said first chamber by said at least one pressure sensor while the aspiration system (100) remains in said second predetermined volume reference position R2;
   g) switching said first valve (14) from said closed position to said open position so that said first chamber (12) and said reference chamber (10) achieve both a final pressure $P_2$;
   h) measuring said final pressure $P_2$ by said at least one pressure sensor (20);
   i) determining the value of said displaced volume $\Delta V$ by using the values of said initial, intermediate and final pressures $P_1$, $P_2$, by applying the following relation:

$$\Delta V = V_{ref}/(P_1/(P_1-P_0)-P_2/(P_2-P_0))$$

2. The method according to claim 1 comprising a step of connecting the first chamber (12) to at least a predetermined second chamber (17) by a second duct (14') comprising a second valve (16'), by positioning said second valve (16') is in its open position.

3. The method according to claim 1 or 2 comprising a step of connecting said reference chamber (16) to at least a second reference chamber (19) by a further duct (14") comprising a further valve (16"), by positioning said further valve (16") is in its open position.

4. The method according to any one of claims 1 to 3 wherein said aspiration system (100) is a pipette, preferable comprising a pipette tip (100'), and comprising, before the volume measurement steps a-j, a further step of selecting a predetermined size of said pipette tip (100').

5. The method according to any one of claims 1 to 4 wherein said volumetric displacement calibration device (1) comprises a step to adapt the size and/or shape of the fluidic connection of said aspiration system (100) to said device (1) in function of a predetermined size (w) of the aspiration aperture (O) of said aspiration system (100).

6. The method according to any one of claims 2 to 4 comprising the fluidic connection of a predetermined selection of chambers to form a first chamber (12) and/or the fluidic connection of another predetermined selection of chambers to form a reference chamber (10).

7. A volumetric displacement calibration device (1) comprising at least one an aperture (18) configured to adapt an aspiration system, preferably a pipette, and wherein

   - said volumetric displacement calibration device (1) comprises at least a first chamber (12) having a volume Voo and at least a reference chamber (12), having a volume $V_{ref}$, connected to said first chamber (12) by a first duct (14);
   - a first valve (16) arranged to said first duct (14), and configured to be switchable from an open position, allowing said first chamber (12) and said reference chamber (10) to be in fluidic connection, to a closed position in which said first (12) and said reference chamber (10) have no fluidic connection;
   - at least one pressure sensor (20) connected to said first chamber (12);

8. The volumetric displacement calibration device (1) according to claim 7 wherein said first chamber (12) comprises at least two chambers in fluidic connection by a duct (14', 14") comprising a valve (16', 16"), or wherein said first chamber (12) has a variable volume.

9. The volumetric displacement calibration device (1) according to claim 7 or claim 8 wherein said reference chamber (12) comprises at least two chambers in fluidic connection by a duct (14''', 14'''') comprising a valve (16''', 16''''), , or wherein said reference chamber (12) has a variable volume.

10. The volumetric displacement calibration device according to any one of claims 7 to 9 wherein said aperture (18) is a configurable aperture which size and/or shape may be adapted according to a predetermined size and/or shape.

11. The volumetric displacement calibration device according to any one of claims 7 to 10 wherein at least a portion is realized at least partially with a MEMS technology and/or comprises at least a portion made in glass.

12. The volumetric displacement calibration device (1) according to any one of claims 7 to 11, wherein said device (1) is a monolithic device (1).

13. The volumetric displacement calibration device (1) according to any one of claims 7 to 11 wherein the volume defined by chamber of an aspiration system (100) and said first chamber (12) is smaller than 6 times the displaced volume of the volumetric displacement calibration device (1) in operation.

14. A volumetric displacement calibration system (2) comprising the volumetric displacement calibration device (1) according to any one of claims 7 to 13 and comprising a computer performing the calculation of a displaced volume according to the method of claims 1 to 6.

15. The use of the volumetric displacement calibration device (1) according to any one of claims 7 to 13, configured to measure the leakage of an aspiration system (100) device.

**Fig. 1a**

**Fig. 1b**

*Fig. 2*

*Fig. 3*

**Fig. 4a**

**Fig. 4b**

**Fig. 4c**

**Fig. 4d**

**Fig. 4e**

**Fig. 4f**

$V_0 = V_p + V_{00} + V_{01} + V_{02}$

$V_{ref} = V_{ref.\,0} + V_{ref.\,1} + V_{ref.\,2}$

*Fig. 5a*

$V_0 = V_p + V_{00} + V_{01}$

$V_{ref} = V_{ref.\,0} + V_{ref.\,1}$

*Fig. 5b*

$V_0 = V_p + V_{00}$

$V_{ref} = V_{ref.\,0}$

*Fig. 5c*

*Fig. 6a*    *Fig. 6b*

Y
Z
X

18

B'

L

A

V

1a
16a
16
L

1

B

1b

1c

18a
18b
18c

3

3a

A'

**Fig. 7a**

1a
16
14
18

10
12

1b

Y

20

Z

**Fig. 7b**

**P100**

V0=
500

Vref=
1500

*Fig.8*

**P1000**

V0=
4000

Vref=
1500

*Fig.9*

*Fig. 10*

*Fig. 11*

*Fig. 12*

*Fig. 13*

Europäisches
Patentamt

European
Patent Office

Office européen
des brevets

# EUROPEAN SEARCH REPORT

Application Number

EP 18 18 8028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/083263 A1 (PHILIPP DIRK [DE] ET AL) 10 April 2008 (2008-04-10) <br> * figures 1a, 1b, 2a * <br> * paragraph [0062] * <br> * abstract * <br> * paragraph [0084] * <br> * paragraph [0092] * <br> * paragraph [0097] * <br> * paragraph [0112] - paragraph [0137] * <br> * paragraph [0065] - paragraph [0067] * <br> ----- | 1-15 | INV. <br> G01F25/00 <br> G01F22/02 |
| A | US 9 358 538 B2 (UNIV MICHIGAN [US]) 7 June 2016 (2016-06-07) <br> * figures 1, 2 * <br> ----- | 1,4,14 | |
| A | US 9 631 616 B2 (STRATEC BIOMEDICAL AG [DE]) 25 April 2017 (2017-04-25) <br> * figure 1 * <br> * column 7, line 43 - line 48 * <br> ----- | 1,14,15 | |
| A | WO 2018/091075 A1 (TECAN SCHWEIZ AG [CH]) 24 May 2018 (2018-05-24) <br> * figures 6, 7 * <br> ----- | 1-15 | TECHNICAL FIELDS SEARCHED (IPC) <br> G01F <br> B01L |
| A | DE 44 37 610 A1 (BRAND GMBH & CO [DE]) 25 April 1996 (1996-04-25) <br> * figures 1, 2, 3 * <br> ----- | 1-15 | |
| A | US 2003/215957 A1 (LEMMO TONY [US] ET AL) 20 November 2003 (2003-11-20) <br> * figure 4 * <br> ----- | 1-15 | |

The present search report has been drawn up for all claims

| Place of search | Date of completion of the search | Examiner |
|---|---|---|
| The Hague | 21 January 2019 | Régert, Tamás |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 8028

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2019

| Patent document cited in search report | | Publication date | Patent family member(s) | | Publication date |
|---|---|---|---|---|---|
| US 2008083263 | A1 | 10-04-2008 | DE 102007010345 | A1 | 10-04-2008 |
| | | | US   2008083263 | A1 | 10-04-2008 |
| US 9358538 | B2 | 07-06-2016 | NONE | | |
| US 9631616 | B2 | 25-04-2017 | GB    2506469 | A | 02-04-2014 |
| | | | US  2014010667 | A1 | 09-01-2014 |
| WO 2018091075 | A1 | 24-05-2018 | WO  2018091075 | A1 | 24-05-2018 |
| | | | WO  2018091472 | A1 | 24-05-2018 |
| DE 4437610 | A1 | 25-04-1996 | NONE | | |
| US 2003215957 | A1 | 20-11-2003 | NONE | | |

EPO FORM P0459

For more details about this annex : see Official Journal of the European Patent Office, No. 12/82

**EP 3 608 640 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120240663 A
- US 3962916 A
- US 8561459 B